# EUROPÄISCHE PATENTSCHRIFT

(11) **EP 1 144 317 B1**
(45) Veröffentlichungstag und Bekanntmachung des Hinweises auf die Patenterteilung: **28.08.2002**
(21) Anmeldenummer: 99968377.4
(22) Anmeldetag: 23.12.1999
(51) Int. Cl.: C02F 3/20, B01D 21/00

(54) **VORRICHTUNG ZUR AEROBEN MIKROBIOLOGISCHEN AUFBEREITUNG VON ABWASSER**
DEVICE FOR THE AEROBIC MICROBIOLOGICAL TREATMENT OF WASTE WATER
DISPOSITIF DE TRAITEMENT MICROBIOLOGIQUE AEROBIE D'EAUX USEES

(30) Priorität: 29.12.1998 DE 19860942
(43) Veröffentlichungstag der Anmeldung: 17.10.2001
(73) Patentinhaber: Lühr, Wolfgang, 13355 Berlin (DE)
(72) Erfinder: Lühr, Wolfgang, 13355 Berlin (DE)
(74) Vertreter: Pfenning, Meinig & Partner
(86) Internationale Anmeldenummer: EP9910353
(87) Internationale Veröffentlichungsnummer: WO00039033

(56) Entgegenhaltungen:
- WO-A-91/19681
- WO-A-95/06010
- DE-A- 4 116 144
- DE-A- 19 621 156
- PATENT ABSTRACTS OF JAPAN vol. 1996, no. 09, 30. September 1996 (1996-09-30) & JP 08 117776 A (FUJI CAR MFG CO LTD), 14. Mai 1996 (1996-05-14)

## Beschreibung

Die Erfindung betrifft eine Vorrichtung zur aeroben mikrobiologischen Aufbereitung von Abwasser durch Erzeugung einer Biodispersion.

Aerob lebende Mikroorganismen müssen mit in Wasser gelöstem Sauerstoff versorgt werden, damit sie die im Abwasser enthaltenen "Schmutzquellen" durch Veratmung umwandeln und mineralisieren können. Bei einem hohen Angebot der umwandelbaren Wasserinhaltsstoffe und genügend gelöstem Sauerstoff im Abwasser erfolgt die mikrobiologische Veratmung als sogenannte "Vermehrungsatmung", wobei sich Mikroorganismen durch Teilung vermehren und deshalb das hohe Angebot abbauen können. Bei geringem Angebot schalten die Mikroorganismen auf eine "Lebenserhaltungsatmung", bei der nur eine geringe Umsetzung durchgeführt wird.

Nach dem Stand der Technik kommen Technologien zum Einsatz, die eine Vermehrungsatmung zur Folge haben, da hohe Abbauleistungen in den Reaktoren erreicht werden sollen. Diese Vermehrungsatmung bringt aber das technologische Hauptproblem der Abwasserreinigung mit sich, das darin liegt, daß sehr viel Klärschlamm erzeugt wird, der nur sehr kostenaufwendig entsorgt werden kann.

Der Erfindung liegt daher die Aufgabe zugrunde, eine Vorrichtung zur aeroben mikrobiologischen Aufbereitung von Abwasser zu schaffen, bei der nur vergleichsweise wenig Klärschlamm erzeugt wird, wobei gleichzeitig ein guter Wirkungsgrad beibehalten wird und ein Klarwasser guter Qualität erzielt wird und wobei ein einfacher Aufbau der Vorrichtung gewährleistet sein soll, der an unterschiedliche Abwassermengen anpassbar ist.

Diese Aufgabe wird erfindungsgemäß durch die Merkmale des Hauptanspruchs gelöst.

Dadurch, daß die erfindungsgemäße Vorrichtung eine im unteren Teil des Reaktors angeordnete Filter- und Belüftungseinheit aufweist, die aus übereinander angeordneten porösen, als Membranen dienenden Hohlkörpern besteht, wird ein Bio-Membranreaktor zur Verfügung gestellt, der das Klärschlammproblem dadurch reduziert, daß durch Mikrofiltration die Mikroorganismen im Bio-Membran-Reaktor zurückgehalten werden und der sich daraus ergebende Veratmungsstreß für die Mikroorganismen, bedingt dadurch, daß zwar genügend Sauerstoff zur Verfügung steht, aber die C-Quelle nicht ausreichend ist, so daß sie mit dem Stoffwechsel haushalten müssen, zu einer Lebenserhaltungsatmung führt. Die Lebenserhaltungsatmung bedingt zwar einen geringeren Stoffwechsel, dieser wird aber durch die höhere mikrobiologische Dichte wieder wettgemacht, so daß insgesamt eine Abbauleistung pro m2 Reaktor wie bei der Vermehrungsatmung erreicht wird. Die bei der Mikrofiltration in die Poren der porösen Membranen eindringenden Mikroorganismen und Wasserinhaltsstoffe werden bei der Belüftung, die stoßartig erfolgt, wieder ausgespült, so daß sehr lange Membranstandseiten möglich sind. Durch den wechselnden Belüftungs- und Mikrofiltrationsvorgang werden die porösen Hohlkörper, die jeweils als Membran dienen, in beiden Richtungen benutzt.

Neben der Reduzierung der Biomasse, d.h. des Klärschlamms wird durch die Mikrofiltration das Abwasser so aufbereitet, daß es den gesetzlichen Anforderungen zur Verrieselung vor Ort und zur Direkteinleitung genügt, wodurch eine dezentrale Abwasserreinigung zur Verfügung gestellt werden kann und der Wasserkreislauf besonders in ländlichen Gemeinden geschlossen werden kann.

Durch die übereinander angeordneten porösen, als Membrane dienenden Hohlkörper, deren Mikroporen gleichmäßig über den Querschnitt des Reaktors verteilt sind, ist ein gezielter und wirtschaftlicher Sauerstoffeintrag an jeder Stelle über dem Querschnitt möglich, so daß keine Sauerstoffunterversorgung entsteht und die Mikroorganismen am Leben bleiben. Nach der Mikrofiltration wird ein Klarwasser einer Qualität erreicht, die eine Wiederverwendung in der Produktion für Brauchwasser usw. ermöglicht.

Durch die in den Unteransprüchen angegebenen Maßnahmen sind vorteilhafte Weiterbildungen und Verbesserungen möglich. Besonders vorteilhaft ist, daß bei Vorsehen entweder mehrere Reaktoren oder von mindestens zwei Filter- und Belüftungseinheiten, die wechselseitig belüften und filtern, ein kontinuierlicher Betrieb möglich ist.

Durch die Steuerung des Belüftungsvorganges, aber nicht von den Signalen der Sauerstoffmeßvorrichtung und der Druckmeßvorrichtung im Reaktorsammelraum, kann der gewünschte Vordruck für die Mikrofiltration eingestellt werden und die Reaktorverweilzeit des Abwassers bestimmt werden.

Ausführungsbeispiele der Erfindung sind in der Zeichnung dargestellt und werden in der nachfolgenden Beschreibung näher erläutert.

Es zeigen
- Figur 1: den schematischen Aufbau einer erfindungsgemäßen Vorrichtung nach einem Ausführungsbeispiel der Erfindung,
- Figur 2: die schematische Darstellung von mehreren parallel arbeitenden Reaktoren,
- Figur 3: eine Vorrichtung entsprechend Figur 1 mit Durchflußregelamaturen für den kontinuierlichen Wasserzulaufbetrieb in Überdruck
- Figur 4: einen Reaktor mit 2 Filter- und Belüftungseinheiten, und
- Figur 5: eine perspektivische Ansicht eines Ausführungsbeispiels eines porösen Hohlkörpers.

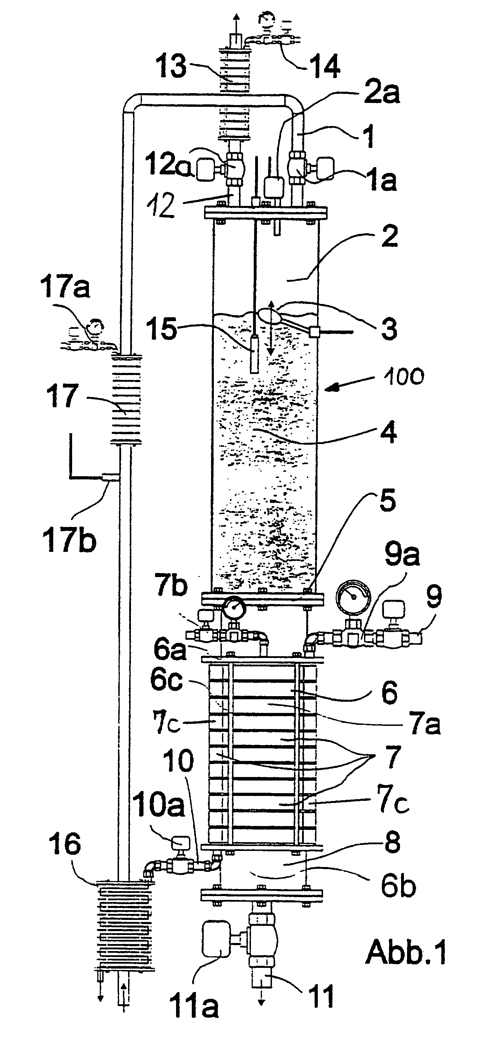

Die in Figur 1 dargestellte Vorrichtung zur aeroben mikrobiologischen Aufbereitung von Abwasser weist als wesentlichen Bestandteil einen Reaktor 100 auf, der mit einer Abwasserzulaufleitung 1 verbunden ist, die in den oberen Teil des Reaktors 100 mündet, der einen Sammelraum oder Reaktionsraum 4 bildet. Eine Filter- und Belüftungs- bzw. Begasungseinheit 6 ist über ein erstes Flanschteil 5 mit dem Sammelraum 4 verbunden und über ein zweites Flanschteil 8 an eine Reaktorablaufleitung 11 eingeschlossen, die von einem Magnetventil 11a gesteuert wird, und die zum Austrag von Material und zur Reinigung dient.

Die Filter- und Belüftungseinheit 6 besteht aus einzelnen stapelweise übereinander angeordneten Hohlkörpern 7, die scheibenförmig ausgebildet sind und die aus porösem Material, vorzugsweise einem porösen Keramikmaterial bestehen. Die scheibenförmigen Membranteile bzw. Hohlkörper 7 sind von zwei Anschlußköpfen 6a, 6b eingefaßt, und werden von Zugstangen 6c zusammengehalten.

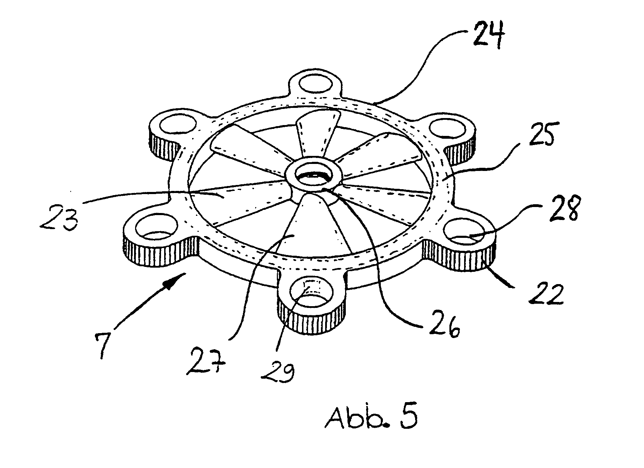

In Figur 5 ist ein Ausführungsbeispiel eines Membranteils bzw. Hohlkörpers 7 dargestellt, der in der Vorrichtung nach Figur 1 verwendbar ist. Der Hohlkörper besteht aus einem Außenring 24, einem Innenring 26, zwischen Innenring 26 und Außenring 24 angeordnete Stege 27 sowie an dem Außenring 24 angeformten Ansätzen 22 mit Durchgangslöchern 28. In dem Außenring 24 ist ein Außenringkanal 25 ausgeformt, der durch die gestrichelten Linien angedeutet ist. In gleicher weise sind die Stege 27 hohl ausgebildet und weisen die gestrichelt angedeuteten Stegkanäle 23 auf. Die Öffnungen 28 können über auszubrechende Bereiche 29 selektiv mit dem Außenringkanal 25 verbunden werden. Auch der Innenring 26 kann einen Innenringkanal aufweisen. Im dargestellten Ausführungsbeispiel weist der Hohlkörper eine mittige Durchgangsöffnung auf, diese muß jedoch nicht vorgesehen sein, es kann beispielsweise ein hohles Verbindungsteil die Stege 27 miteinander verbinden. Im dargestellten Ausführungsbeispiel sind sechs Stege 27 und sechs Ansätze 22 vorgesehen, es können jedoch mehr oder weniger von beiden ausgebildet werden. In Figur 5 ist der Hohlkörper rund ausgebildet, selbstverständlich kann er auch viereckig sein und die Durchgangslöcher 28 können in dem viereckigen Körper ausgeformt sein. Auch die Stege können andere Formen aufweisen, grundsätzlich sollte jedoch eine gleichmäßige Verteilung über den Querschnitt vorgesehen sein.

Die in Figur 1 dargestellte Filter- und Belüftungseinheit 6 besteht aus den in Figur 5 dargestellten Membrankörpern 7, die vorzugsweise gegeneinander versetzt übereinander angeordnet sind. Dabei sind sie so zueinander versetzt, daß mindestens ein von den Durchgangsöffnungen 28 gebildeter Kanal 7c hergestellt wird, wobei in Figur 1 zwei Kanäle 7c vorgesehen sind. Der eine Kanal 7c ist über das erste Flanschteil 5 mit einer Druckluft- oder Sauerstoffleitung 9 verbunden, in der ein Magnetventil 9a, das Bestandteil einer Regelarmatur sein kann, angeordnet ist, während der zweite Kanal 7c mit einer am zweiten Flanschteil 8 angeordneten Ablaufleitung 10 für Klarwasser verbunden ist, in der gleichfalls ein Magnetventil 10a angeordnet ist.

In dem Sammel- oder Reaktorraum 4 ist eine Sauerstoffsonde 15 zur Messung des Sauerstoffgehalts sowie ein als Schwimmer 3 ausgebildeter Niveauschalter vorgesehen. Weiterhin ist ein Drucksensor 2a zur Messung des Innendrucks im Reaktorraum 4 vorgesehen.

Zur Ausnutzung der Wärme des über die Ablaufleitung 10 austretenden Klarwassers ist in der Abwasserzulaufleitung 1 ein Wärmetauscher 16 vorgesehen, der vorzugsweise gleichfalls aus Hohlkörpern entsprechend Figur 5 besteht, die jedoch nicht porös sind, wobei die Zufuhrleitung 1 mit den die Hohlkörper einfassenden Flanschen verbunden ist und das Abwasser zwischen den Stegen hindurchströmt und wobei das Klarwasser in den Hohlräumen fließt und seine Wärme an das Abwasser abgibt.

Weiterhin ist in bzw. an der Abwasserzufuhrleitung 1 ein pH-Wert-Sensor 17b zur Messung des pH-Wertes des Abwassers sowie eine Einmischvorrichtung 17 mit entsprechenden Regel- und Ventilanordnungen 17a vorgesehen. Auch die Einmischvorrichtung kann, wie dargestellt, aus porösen Hohlkörpern bestehen und in gleicher Weise, wie die Filter- und Belüftungseinheit 6 aufgebaut sein.

Schließlich ist der Reaktor 100 mit einer Abluftleitung 12 mit Ventilen 12a verbunden, wobei in der Abluftleitung ein Absorptionsreaktor 13 angeordnet ist, der zur Beseitigung von Gerüchen dient. Dazu ist der Absorptionsreaktor mit einer Zulaufleitung 14 für Leitungswasser verbunden. Auch der Absorptionsreaktor 13 ist wie die Filter- und Belüftungseinheit 6 aufgebaut, wobei die Abluft zwischen den Stegen der porösen Hohlkörper hindurchströmt und das Wasser in den Hohlräumen fließt.

Die Filter- und Belüftungseinheit 6, die aus den porös-keramischen Hohlkörpern 7 besteht, ist nach außen hin durch eine Glasur oder eine dichtende Beschichtung abgedichtet oder die gesamte Anordnung ist in einem dichtenden Gehäuse aufgenommen. Weiterhin kann die Filter- und Belüftungseinheit 6 mit einem zusätzlichen Reinigungskanal 7a ausgebildet sein, der mit einer über ein Ventil 7b gesteuerten Leitung zur Zufuhr von Reinigungsmittel verbunden ist.

Zur Füllung des Reaktors 100 mit Abwasser wird über die Zulaufleitung 1 bei geöffnetem Ventil 1a Abwasser in den Reaktorraum 4 geleitet, in dem sich Biomasse befindet, die sich mit dem Abwasser mischt. Bei vielen Industrieabwässern ist es erforderlich, den pH-Wert des Abwassers zu überprüfen und ggf. durch Zugabe von Salzsäure oder Natronlauge zu neutralisieren. Der pH-Wert wird über die Sonde 17b gemessen und ggf. über die Regelarmatur 17a und dem Reaktor 17 die notwendige Flüssigkeit eindosiert. Bei der Einfüllphase ist auch das Ventil 12a geöffnet, so daß die durch das Abwasser verdrängte Luft aus dem Reaktionsraum 4 entweichen kann. Bei dem Füllprozeß sind die Ventile 9a, 10a und 11a geschlossen. Der Reaktionsraum wird solange mit Abwasser gefüllt, bis der Schwimmerschalter 3 die nicht dargestellte Abwasserpumpe abschaltet, wobei für die entsprechenden Steuervorgänge eine Steuereinrichtung vorgesehen ist, die die Signale von den verschiedenen Meßeinrichtungen empfängt und entsprechend die Ventile bzw. sonstige Regelamaturen steuert und/oder regelt. Ist der Füllprozeß abgeschlossen, wird das vorzugsweise als Magnetventil ausgebildete Ventil 1a gleichfalls geschlossen, so daß nur noch das Ventil 12 geöffnet ist.

Die Abluft des Reaktorraums 4 ist mit Geruchsstoffen und Aerosolen versetzt. Damit diese nicht in die Umwelt gelangen ist der Absorptionsreaktor 13 vorgesehen, der, wie erwähnt, aus porös-keramischen Hohlkammerelementen besteht. Über die Zulaufleitung 14 wird Leitungswasser zugeführt, das auf der Oberfläche der porös-keramischen Membranen einen Wasserfilm bildet, an dem sich die Geruchsstoffe und Aerosole niederschlagen. Das beladene Wasser tropft in den Reaktor zurück. Bei der Befüllung mit Abwasser, während der Abluft über die Abluftleitung 12 entweichen kann, ist das entsprechende Ventil der Zulaufleitung 14 für Leitungswasser geöffnet, so daß die porös-keramischen Elemente des Absorptionsreaktors 13 mit der sich immer erneuernden Absorptionsflüssigkeit benäßt werden.

Nach dem Füllen des Reaktorraums 4 wird der Belüftungsprozeß angeleitet, wobei das Ventil 9a geöffnet wird und der Kanal 7c mit einer Druckgasquelle, d.h. Druckluft oder Sauerstoff verbunden wird. Die Druckluft verteilt sich stoßartig über den Kanal 7c auf alle Membranelemente 7 und sie entweicht über die Mikroporen dieser Elemente, wobei die sich auf der Oberfläche der Membranelemente 7 abgesetzte Biomasse von der Oberfläche weggeblasen wird. Der Sauerstoff bzw. die Luft wird gleichmäßig, d.h. in gleichmäßiger Verteilung über die Querschnittsfläche des Reaktors in das die Membranelemente 7 umgebende Wasser eingeleitet und steigt nach oben in den Reaktorraum 4. Dabei wird über die Sauerstoffsonde 15 der Sauerstoffgehalt gemessen und der Sauerstoff bzw. die Luft wird solange zugeführt bis ein gewünschter Sauerstoffwert erreicht ist.

Dann wird das Ventil 12a geschlossen, damit die Luft nicht mehr entweichen kann und es bildet sich ein Luftpolster 2 in dem Reaktorinnenraum 5. Der Innendruck im Reaktorraum 4 ist ausschlaggebend für die Filtration, wobei die Membranporengröße selbstverständlich eine Rolle spielt, die an die Parameter des zu filternden Abwassers angepaßt sein können. Je höher der Vordruck, d.h. der Druck im Reaktorraum 4 ist, um so größer ist die Filtrationsleistung. Wenn der Druck im Reaktorinnenraum 4, d.h. der Druck in des Luftpolsters 2, einen bestimmten Wert am Drucksensor 2a erreicht, wird das Ventil 9a geschlossen, so daß keine Luft bzw. kein Sauerstoff mehr in die Filter-und Belüftungseinheit 6 gelangt.

Es folgt nun der Filtervorgang, bei dem die Wirkungsrichtung der Membrankörper 7 zur Belüftungsrichtung umgekehrt wird. Zur Mikrofiltration wird das Ventil 10a geöffnet und der Druck im Reaktor wird über die jetzt als Filter wirkenden Hohlkörper 7 abgebaut, wobei Klarwasser über den Kanal 7c und die Leitung 10 in den Wärmetauscher 16 gelangt.

Wenn der Druckausgleich stattgefunden hat, wird das Magnetventil 10a geschlossen und der Prozeß beginnt von vorn.

Zur Entleerung des Reaktors wird die Ablaufleitung 11 genutzt, wobei das Magnetventil 11a geöffnet wird. Dieser Ablauf 11 kann auch zur Reinigung des Reaktors benutzt werden, wobei Reinigungsmittel, d.h. Säure oder Lauge in den Reaktor eingeleitet werden und über den Ablauf 11 herausgelassen werden. Dabei kann auch Dampf, beispielsweise zur Sterilisierung, verwendet werden. Dieser Reinigungsprozeß kann aber auch über den Zulauf mit dem Einflußkanal 7a integriert sein, wobei am Anschlußkopf 6a die Anschlußarmatur 7b angeschlossen ist. Die Anzahl der Membran- bzw. Hohlkörperelemente 7 richtet sich nach der zu installierenden keramischen Membranfläche und deren Filtrationsund Begasungs- bzw. Belüftungsleistung.

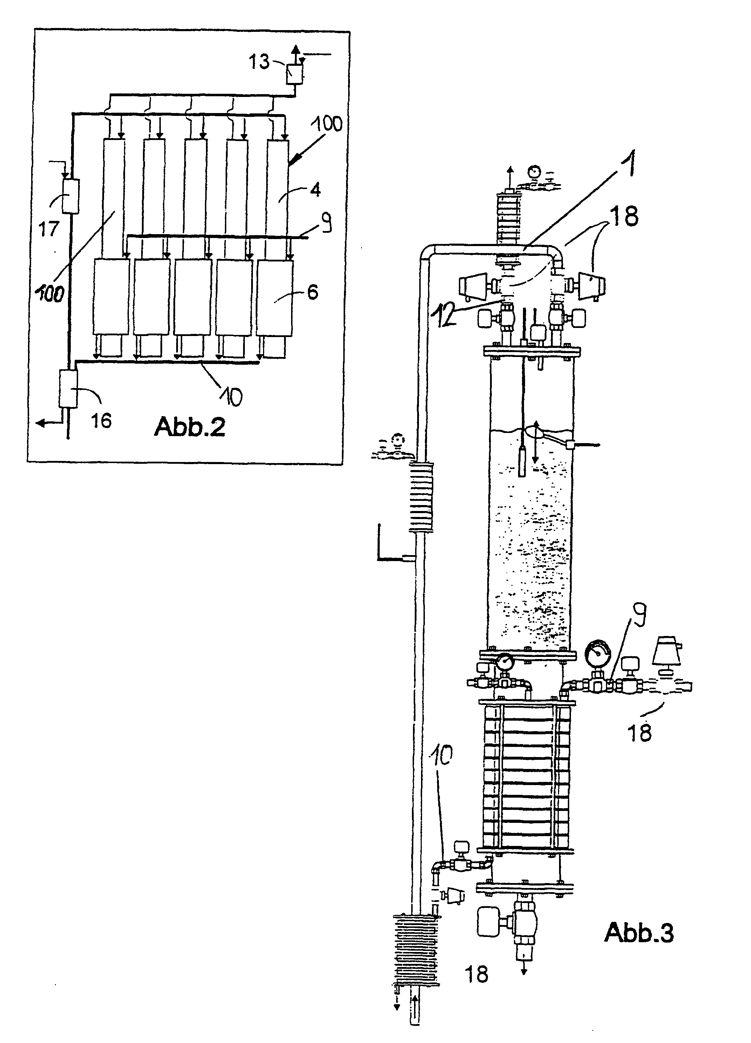

In Figur 2 ist eine Mehrzahl von Reaktoren 100 vorgesehen, die parallel angeordnet sind, wobei aber die Prozeßzustände und der Prozeßablauf jeweils unterschiedlich sein kann. Die Reaktorräume 4 sind jeweils mit einer Abwasserzufuhrleitung 1 und einer Ablaufleitung 10 für das Klarwasser und mit einer Versorgungsleitung 9 für Luft oder Sauerstoff verbunden. Durch diese Anordnung kann ein kontinuierlicher Betrieb realisiert werden.

In Figur 3 ist ein Reaktor 100 für den kontinuierlichen Wasserzulaufbetrieb in Überdruck dargestellt. Hier sind in der Abluftleitung 12, im Ablauf 10, in der Abwasserzulaufleitung 1 und in der Druckluftleitung 9 Durchflußregelarmaturen 18 eingebaut, die eine Reaktorfahrweise in einem bestimmten Druckbereich erlauben. Dieser Betrieb fordert mehr Regelaufwand, bringt aber eine höhere Leistung, da mit zunehmendem Wasserdruck die Sauerstoffsättigungsgrenze heraufgesetzt wird, so daß den Mikroorganismen mehr Sauerstoff zur Verfügung steht.

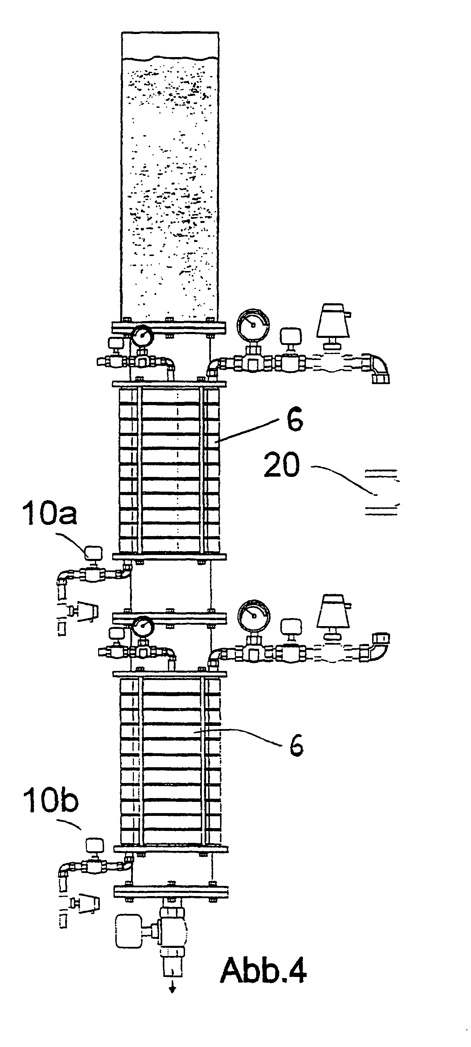

In Figur 4 sind 2 Filter- und Belüftungseinheiten 6 dargestellt, die jeweils wechselseitig zwischen dem Belüftungsvorgang und dem Filtervorgang umgeschaltet werden. Dazu ist in der Druckluftleitung 9 eine Umschaltarmatur 20 vorgesehen, über die die Druckluft zwischen der oberen Filter- und Belüftungseinheit und der unteren Filter- und Belüftungseinheit umgeschaltet wird. Auch hier wird der Reaktor kontinuierlich im Überdruck gefahren, wobei die Membran- bzw. Hohlkörperelemente der entsprechenden Einheit einmal als Belüftung und dann als Mikrofiltration benutzt werden, wenn das entsprechende Magnetventil 10a oder 10b geöffnet ist, so daß auch hier die Verstopfung der Membranen durch Rückbelüftung minimiert wird.

Die keramischen Misch- und Kontaktflächen der Hohlkörper können mit Katalysatoren oder Enzymen beschichtet sein, ohne daß dabei die Porosität verloren geht. Dabei werden die Enzyme zum Abbau bzw. Cracken von Eiweißstoffen in den Abwässern verwendet. Als Beispiel für die Katalysatoren kann der Eintrag von Wasserstoffperoxid zur Oxidation bzw. Reduktion von Kohlenwasserstoffen (auch halogenierte Kohlenwasserstoffen) im Abwasser mit einer katalytisch wirkenden Beschichtung der keramischen Membran an der Reaktorinnenseite mit Manganoxid genannt werden, bei der Sauerstoff- und Wasserstoffradikale gebildet werden.

Eine solche Katalysestufe kann auch im Wasserzulauf vorgeschaltet sein wie die pH-Wert-Regelung.

Die erfindungsgemäße Vorrichtung kann beispielsweise auch als Miniklärwerk für Toilettenanlagen bzw. Einzeltoiletten von Campinganlagen, Bussen, Schiffen, Flugzeugen, Zügen oder dgl. verwendet werden. Dabei kann die Vorrichtung zusätzlich eine Zerkleinerungspumpe zum Zerkleinern von Feststoffen aufweisen, wobei die Hohlkörper dann eine mittige Bohrung oder einen Innenring aufweisen können, damit ein Wellenantrieb eingebaut werden kann.

## Patentansprüche

1. Vorrichtung zur aeroben mikrobiologischen Aufbereitung von Abwasser mit einem Biomasse enthaltenden Reaktor, der einen oberen und einen unteren Reaktorraum aufweist, wobei in den oberen Reaktorraum das zu reinigende Abwasser über eine Abwasserzulaufleitung (1) zuführbar ist und, mit einem Teil der Biomasse gemischt, aufgenommen ist und daran anschließend eine Filter und Belüftungseinheit (6) angeordnet ist, die aus mindestens einem porösen, als Membran dienenden Hohlkörper (7) besteht, der einen Durchströmquerschnitt für Wasser und Biomasse freiläßt, wobei der Hohlraum des mindestens einen Hohlkörpers (7) an eine Gasquelle und an einen Ablauf (10) für gefiltertes Klarwasser anschließbar ist und wobei der mindestens eine Hohlkörper (7) beim Belüftungsvorgang als Belüftungselement und beim Filtervorgang als Filterelement dient.

2. Vorrichtung nach Anspruch 1, **dadurch gekennzeichnet, daß** der Hohlkörper (7) als scheibenförmiges Element mit Durchbrechungen für den Durchfluß von Wasser und Biomasse ausgebildet ist, wobei das Element mindestens eine Öffnung für den Zustrom von Gas aus der Gasquelle bzw. für den Ablauf des gefilterten Klarwassers aufweist.

3. Vorrichtung nach Anspruch 1 oder 2, **dadurch gekennzeichnet, daß** mehrere Hohlkörper (6) übereinander angeordnet sind und die Hohlräume der Hohlkörper miteinander verbunden sind.

4. Vorrichtung nach einem der Ansprüche 1 bis 3, **dadurch gekennzeichnet, daß** jeder Hohlkörper (7) mindestens ein Durchgangsloch (28) aufweist, das mit dem Hohlraum (25) verbunden ist, wobei die Durchgangslöcher der Hohlkörper (7) miteinander verbunden sind und mindestens einen Kanal (7c) bilden, der mit der Gasquelle und/oder dem Ablauf für gefiltertes Klarwasser verbunden ist.

5. Vorrichtung nach einem der Ansprüche 1 bis 4, **dadurch gekennzeichnet, daß** jeder Hohlkörper (7) einen Außenring (24) mit einem Außenringkanal (25) und eine Mehrzahl von von dem Außenring (24) nach innen verlaufenden hohlen Stegen (27) aufweist, wobei die Hohlräume (23) der Stege (27) mit dem Außenringkanal (25) verbunden sind und daß an bzw. in dem Außenring (24) das mindestens eine Durchgangsloch (28) angeordnet ist, das mit dem Außenringkanal (25) verbunden ist.

6. Vorrichtung nach einem der Ansprüche 1 bis 5, **dadurch gekennzeichnet, daß** die Gasquelle eine Druckgasquelle ist.

7. Vorrichtung nach einem der Ansprüche 1 bis 6, **dadurch gekennzeichnet, daß** im Reaktorraum (4) eine Meßvorrichtung (15) zur Messung des Sauerstoffgehaltes angeordnet ist, wobei abhängig vom Sauerstoffgehalt die Öffnungszeit eines Ventils (9a) steuerbar ist, über das die Filter- und Belüftungseinheit (6) mit der Gasquelle verbunden ist.

8. Vorrichtung nach einem der Ansprüche 1 bis 7, **dadurch gekennzeichnet, daß** an bzw. in dem Reaktorraum (4) eine Druckmeßvorrichtung (2a) vorgesehen ist, über die der Vordruck für die Filtration durch die Filter- und Belüftungseinheit (6) einstellbar ist.

9. Vorrichtung nach einem der Ansprüche 1 bis 8, **dadurch gekennzeichnet, daß** in der Abwasserzulaufleitung (1) ein Wärmetauscher (16) angeordnet ist, der mit dem Ablauf (10) für das gefilterte Klarwasser verbunden ist.

10. Vorrichtung nach einem der Ansprüche 1 bis 9, **dadurch gekennzeichnet, daß** mit dem Reaktorraum (4) eine Abluftleitung (12) verbunden ist, in der ein Absorptionsreaktor (13) zur Niederschlagung von Geruchsstoffen und Aerosolen vorgesehen ist.

11. Vorrichtung nach einem der Ansprüche 1 bis 10, **dadurch gekennzeichnet, daß** an oder in der Abwasserzulaufleitung (1) eine Meßvorrichtung (17b) zur Messung des pH-Wertes und eine Vorrichtung (17) zur Einmischung von Stoffen zur pH-Wert-Regulierung, abhängig von den Meßwerten vorgesehen sind.

12. Vorrichtung nach einem der Ansprüche 1 bis 11, **dadurch gekennzeichnet, daß** die Filter- und Belüftungseinheit einen Reinigungskanal (7a) zur Zuführung eines Reinigungsmediums aufweist.

13. Vorrichtung nach einem der Ansprüche 1 bis 12, **dadurch gekennzeichnet, daß** in der Abwasserzulaufleitung (1) und/oder der Abluftleitung (12) und/oder dem Ablauf (10) für Klarwasser und/oder einer Verbindungsleitung (9) zur Gasquelle Durchflußregelvorrichtungen vorgesehen sind.

14. Vorrichtung nach einem der Ansprüche 1 bis 13, **dadurch gekennzeichnet, daß** mindestens zwei Filter- und Belüftungseinheiten (6) vorgesehen sind, die jeweils wechselweise zur Filtration und zur Belüftung dienen, wobei eine Umschaltvorrichtung (20) zur Umschaltung der Gaszufuhr von der einen auf die andere Filter- und Belüftungseinheit (6) und umgekehrt vorgesehen ist.

15. Vorrichtung nach einem der Ansprüche 1 bis 14, **dadurch gekennzeichnet, daß** eine Steuer- und Regeleinrichtung vorgesehen ist, die abhängig von den Meßwerten der Meßvorrichtungen zur Messung des Sauerstoffgehaltes (15) des Drucks (2a) und/oder des pH-Wertes (17b) und der Durchflußregelvorrichtungen (18) die Abwasserzufuhr, die Gaszufuhr, die Dosierung zur pH-Wert-Regulierung und/oder die Verweilzeiten des Abwassers in kontinuierlicher oder diskontinuierlicher Betriebsweise steuert und regelt.

16. Vorrichtung nach einem der Ansprüche 1 bis 15, **dadurch gekennzeichnet, daß** die Innen- und/oder Außenflächen der Hohlkörper mit Enzymen und/oder Katalysatoren beschichtet sind.

17. Vorrichtung nach einem der Ansprüche 1 bis 16, **dadurch gekennzeichnet, daß** der Wärmetauscher (16) und/oder der Absorptionsreaktor (13) und/oder die Vorrichtung zum Einmischen (17) aus Hohlkörpern bestehen, wobei die Hohlkörper des Wärmetauschers nicht porös sind.

## Claims

1. Device for the aerobic microbiological treatment of waste water using a reactor containing biomass, which has an upper and a lower reactor chamber, wherein in the upper reactor chamber, the waste water to be purified can be supplied via a waste water supply pipe (1) and, mixed with some of the biomass, is taken up and then a filter and aeration unit (6) is arranged thereon, which consists of at least one porous hollow body (7) serving as a membrane and which frees a throughflow cross-section for water and biomass, wherein the hollow chamber of the at least one hollow body (7) can be connected to a gas source and to a discharge (10) for filtered purified water, and wherein the at least one hollow body (7) serves as aeration element during the aeration process and as filter element during the filter process.

2. Device according to claim 1, **characterised in that** the hollow body (7) is designed as a disc-like element having perforations for the throughflow of water and biomass, wherein the element has at least one opening for the supply of gas from the gas source or for the discharge of the filtered purified water.

3. Device according to claim 1 or 2, **characterised in that** several hollow bodies (6) are arranged one above another and the hollow chambers of the hollow bodies are connected to one another.

4. Device according to one of claims 1 to 3, **characterised in that** each hollow body (7) has at least one passage hole (28), which is connected to the hollow chamber (25), wherein the passage holes of the hollow bodies (7) are connected to one another and form at least one channel (7c), which is connected to the gas source and/or the discharge for filtered purified water.

5. Device according to one of claims 1 to 4, **characterised in that** each hollow body (7) has an outer ring (24) having an outer ring channel (25) and a plurality of hollow bars (27) running inwards from the outer ring (24), wherein the hollow chambers (23) are connected to the bars (27) by the outer ring channel (25), and **in that** the at least one passage hole (28), which is connected to the outer ring channel (25), is arranged on or in the outer ring (24).

6. Device according to one of claims 1 to 5, **characterised in that** the gas source is a compressed gas source.

7. Device according to one of claims 1 to 6, **characterised in that** a measuring device (15) for measuring the oxygen content is arranged in the reactor chamber (4), wherein depending on the oxygen content, the opening time of a valve (9a), by means of which the filter and aeration unit (6) is connected to the gas source, can be controlled.

8. Device according to one of claims 1 to 7, **characterised in that** a pressure measuring device (2a) is provided on or in the reactor chamber (4), by means of which the preliminary pressure for filtration by the filter and aeration unit (6) can be adjusted.

9. Device according to one of claims 1 to 8, **characterised in that** a heat exchanger (16), which is connected to the discharge (10) for the filtered purified water, is arranged in the waste water supply pipe (1).

10. Device according to one of claims 1 to 9, **characterised in that** a waste air pipe (12), in which an absorption reactor (13) is provided to deposit aromatic substances and aerosols, is connected to the reactor chamber (4).

11. Device according to one of claims 1 to 10, **characterised in that** a measuring device (17b) for measuring the pH value and a device (17) for mixing in materials for pH value regulation, depending on the measured values, are provided on or in the waste water supply pipe (1).

12. Device according to one of claims 1 to 11, **characterised in that** the filter and aeration unit has a cleaning channel (7a) for supplying a cleaning medium.

13. Device according to one of claims 1 to 12, **characterised in that** throughflow control devices are provided in the waste water supply pipe (1) and/or the waste air pipe (12) and/or the discharge (10) for purified water and/or a connecting pipe (9) to the gas source.

14. Device according to one of claims 1 to 13, **characterised in that** at least two filter and aeration units (6) are provided, which in each case serve alternately for filtration and for aeration, wherein a switch-over device (20) is provided for switching over the gas supply from one to the other filter and aeration unit (6) and vice versa.

15. Device according to one of claims 1 to 14, **characterised in that** a control and regulating device is provided, which controls and regulates the waste water supply, the gas supply, metering for pH value regulation and/or the residence times of the waste water in continuous or discontinuous operation, depending on the measured values of the measuring devices for measuring the oxygen content (15), the pressure (2a) and/or the pH value (17b) and the throughflow control devices (18).

16. Device according to one of claims 1 to 15, **characterised in that** the inner and/or outer surfaces of the hollow bodies are coated with enzymes and/or catalysts.

17. Device according to one of claims 1 to 16, **characterised in that** the heat exchanger (16) and/orthe absorption reactor (13) and/or the device for mixing (17) consist of hollow bodies, wherein the hollow bodies of the heat exchanger are not porous.

## Revendications

1. Dispositif de traitement microbiologique aérobie d'eaux usées avec un réacteur qui contient une biomasse et qui présente une chambre de réacteur supérieure et une chambre de réacteur inférieure, dans lequel les eaux usées à purifier peuvent être amenées dans la chambre de réacteur supérieure par une conduite d'amenée des eaux usées (1) et, mélangées à une partie de la biomasse, y être absorbées, et une unité de filtration et d'aération (6) est raccordée à ladite partie de la biomasse, laquelle unité se compose d'au moins un corps creux poreux (7) servant de membrane, lequel présente une section de passage pour l'eau et la biomasse, l'espace creux du corps creux (7) au moins pouvant être raccordé à une source de gaz et à un écoulement (10) des eaux clarifiées filtrées, et le corps creux au moins (7) servant d'élément d'aération lors du processus d'aération et d'élément de filtration lors du processus de filtration.

2. Dispositif selon la revendication 1, **caractérisé en ce que** le corps creux (7) est conçu en tant qu'élément en forme de disque présentant des passages pour l'écoulement d'eau et de biomasse, l'élément présentant au moins une ouverture pour l'apport de gaz provenant de la source de gaz ou pour l'écoulement des eaux clarifiées filtrées.

3. Dispositif selon la revendication 1 ou 2, **caractérisé en ce que** plusieurs corps creux (6) sont disposés les uns aux dessus des autres et les espaces creux des corps creux sont reliés les uns aux autres.

4. Dispositif selon l'une des revendications 1 à 3, **caractérisé en ce que** chaque corps creux (7) présente au moins un orifice de passage (28) qui est relié à l'espace creux (25), les orifices de passage des corps creux (7) étant reliés les uns aux autres et formant au moins un canal (7c) qui est relié à la source de gaz et/ou à l'écoulement des eaux clarifiées filtrées.

5. Dispositif selon l'une des revendications 1 à 4, **caractérisé en ce que** chaque corps creux (7) comporte une bague extérieure (24) comportant un canal de bague extérieure (25) et une pluralité de tiges creuses (27) s'étendant vers l'intérieur depuis la bague extérieure (24), les espaces creux (23) des tiges (27) étant reliés au canal de bague extérieure (25), et **en ce qu'**est disposé au niveau de ou dans chaque bague extérieure (24) ledit au moins un orifice de passage (28) qui est relié au canal de bague extérieure (25).

6. Dispositif selon l'une des revendications 1 à 5, **caractérisé en ce que** la source de gaz est une source de gaz comprimé.

7. Dispositif selon l'une des revendications 1 à 6, **caractérisé en ce qu'**est disposé dans la chambre du réacteur (4) un dispositif de mesure (15) permettant de mesurer la teneur en oxygène, la durée d'ouverture d'une soupape (9a) par le biais de laquelle l'unité de filtration et d'aération (6) est reliée à la source de gaz pouvant être commandée en fonction de la teneur en oxygène.

8. Dispositif selon l'une des revendications 1 à 7, **caractérisé en ce qu'**est prévu au niveau de ou dans la chambre du réacteur (4) un dispositif de mesure de la pression (2a) par le biais duquel peut être réglée la pression d'admission pour la filtration par l'unité de filtration et d'aération (6).

9. Dispositif selon l'une des revendications 1 à 8, **caractérisé en ce qu'**est disposé dans la conduite d'amenée des eaux usées (1) un échangeur de chaleur (16) qui est relié à l'écoulement (10) des eaux clarifiées filtrées.

10. Dispositif selon l'une des revendications 1 à 9, **caractérisé en ce qu'**est reliée à la chambre de réacteur (4) une conduite d'évacuation d'air (12) dans laquelle est prévu un réacteur d'absorption (13) destiné à supprimer les substances odorantes et les aérosols.

11. Dispositif selon l'une des revendications 1 à 10, **caractérisé en ce que** sont prévus au niveau de ou dans la conduite d'amenée des eaux usées (1) un dispositif de mesure (17b) permettant de mesurer la valeur de pH et un dispositif (17) d'introduction par mélange de substance à des fins de régulation de la valeur du pH, en fonction des valeurs mesurées.

12. Dispositif selon l'une des revendications 1 à 11, **caractérisé en ce que** l'unité de filtration et d'aération présente un canal de purification (7a) permettant d'amener un moyen de purification.

13. Dispositif selon l'une des revendications 1 à 12, **caractérisé en ce que** sont prévus des dispositifs de régulation du débit dans la conduite d'amenée des eaux usées (1) et/ou la conduite d'évacuation de l'air (12) et/ou l'écoulement (10) des eaux clarifiées et/ou une conduite de raccordement (9) à la source de gaz.

14. Dispositif selon l'une des revendications 1 à 13, **caractérisé en ce qu'**au moins deux unités de filtration et d'aération (6) sont prévues, lesquelles servent respectivement en alternance à la filtration et à l'aération, un dispositif de commutation (20) étant prévu pour commuter l'alimentation en gaz d'une unité de filtration et d'aération à l'autre, et inversement.

15. Dispositif selon l'une des revendications 1 à 14, **caractérisé en ce qu'**est prévu un dispositif de commande et de régulation qui, en fonction des valeurs mesurées par les dispositifs de mesure de la teneur en oxygène (15), de la pression (2a) et/ou de la valeur de pH (17b), et des dispositifs de régulation du débit (18), commandent et régulent l'alimentation en eaux usées, l'apport de gaz, le dosage des agents de régulation de la valeur de pH et/ou les temps de séjour des eaux usées, selon un mode d'exploitation continu ou discontinu.

16. Dispositif selon l'une des revendications 1 à 15, **caractérisé en ce que** les surfaces internes et/ou externes des corps creux sont revêtus d'enzymes et/ou de catalyseurs.

17. Dispositif selon l'une des revendications 1 à 16, **caractérisé en ce que** l'échangeur de chaleur (16) et/ou le réacteur d'absorption (13) et/ou le dispositif d'introduction par mélange (17) sont formés de corps creux, les corps creux de l'échangeur de chaleur n'étant pas poreux.
